# EUROPEAN PATENT APPLICATION

(11) **EP 1 593 945 A1**
(43) Date of publication of application: **09.11.2005**
(21) Application number: 05103436.1
(22) Date of filing: 27.04.2005
(51) Int. Cl.: G01J 9/00

(54) **Wavefront sensor and relay for optical measurement and associated methods**

(30) Priority: 30.04.2004 US 837447
(71) Applicant: Alcon RefractiveHorizons, Inc., Fort Worth, Texas 76134 (US)
(72) Inventor: Curatu, Eugene O., FL 32820, Orlando (US)
(74) Representative: Hanna, Peter William Derek

(57) **Abstract**

An optical wavefront sensing system (10,30) includes a lenslet array (11,31) positioned for receiving an incoming wavefront (12,32). Downstream of the lenslet array is positioned an image transformer (16,36), which transforms the image emerging from the lenslet array at a focal plane (20,40) thereof into a real image. A sensor (22,42) is positioned at a final image plane (21,41) for sensing the transformed image. This sensor may comprise, but not intended to be limited to, a charge-coupled-device (CCD) camera. The method for sensing an optical wavefront includes the steps of receiving an incoming wavefront using a lenslet array and transforming an image emerging from the lenslet array at a focal plane thereof into a real image. The transformed image positioned at a final image plane is then sensed, and, in a preferred embodiment, analyzed to determine wavefront distortions.

## Description

### BACKGROUND OF THE INVENTION

### Field of the Invention

The present invention relates to optical measurement systems and methods, and, more particularly, to wavefront sensor systems and methods.

### Description of Related Art

A perfect or ideal eye diffusely reflects an impinging light beam from its retina through the optics of the eye, which includes a lens and a cornea. For such an ideal eye in a relaxed state, i.e., not accommodating to provide near-field focus, reflected light exits the eye as a sequence of plane waves. However, an eye typically has aberrations that cause deformation or distortion of reflected light waves exiting the eye. An aberrated eye diffusely reflects an impinging light beam from its retina through its lens and cornea as a sequence of distorted wavefronts.

There are a number of technologies that attempt to provide the patient with improved visual acuity. Examples of such technologies include remodeling of the cornea using refractive laser surgery or intra-corneal implants, adding synthetic lenses to the optical system using intra-ocular lens implants, and precision-ground spectacles. In each case, the amount of corrective treatment is typically determined by placing spherical and/or cylindrical lenses of known refractive power at the spectacle plane (approximately 1.0B1.5 cms anterior to the cornea) and literally asking the patient which lens or lens combination provides the clearest vision. This is an imprecise measurement of true distortions in the reflected wavefront because (1) a single spherocylindrical compensation is applied across the entire wavefront; (2) vision is tested at discrete intervals (i.e., diopter units) of refractive correction; and (3) subjective determination by the patient is made in order to determine the optical correction. Thus conventional methodology for determining refractive errors in the eye is substantially less accurate than the techniques now available for correcting ocular aberrations.

One method of measuring ocular refractive errors is disclosed in U.S. Patent No. 5,258,791 to Penney et al. for "Spatially Resolved Objective Autorefractometer," (Penney") which teaches the use of an autorefractometer to measure the refraction of the eye at numerous discrete locations across the corneal surface. Penney '791 further teaches the use of autorefractometer measurements in determining an appropriate corneal surface reshaping to provide emmetropia, a condition of a normal eye when parallel beams or rays of light are focused exactly on the retina and vision is perfect.

By way of example, one method and system known in the art are disclosed by Junzhong Liang et al. in "Objective Measurement Of Wave Aberrations of the Human Eye with the Use of a Hartmann-Shack Wave-Front Sensor" *[J. Opt. Soc. Am.* 11(7), July 1994, pp 1949-57]. Liang et al. teach the use of a Hartmann-Shack wavefront sensor to measure ocular aberrations by measuring the wavefront emerging from the eye by the retinal reflection of a focused laser light spot on the retina's fovea. The actual wavefront is reconstructed using wavefront estimation with Zernike polynomials. A parallel beam of laser light passes through beam splitters and a lens pair, which brings the beam to a focus point on the retina by the optics of the eye. Possible myopia or hyperopia of the tested eye is corrected by movement of a lens within the lens pair. The focused light on the fovea is then assumed to be diffusely reflected and acts as a point source located on the retina. The reflected light passes through the eye and forms a distorted wavefront in front of the eye that results from the ocular aberrations. The aberrated wavefront is then directed to the wavefront sensor.

The Hartmann-Shack wavefront sensor disclosed by Liang et al. includes two identical layers of cylindrical lenses with the layers arranged so that lenses in each layer are perpendicular to one another, as further disclosed in U.S. Patent No. 5,062,702 to Bille. In this way, the two layers operate as a two-dimensional array of spherical lenslets that divide the incoming light wave into sub-apertures. The light through each sub-aperture is brought to focus in the focal plane of the lens array where a charge-coupled-device (CCD) image module resides.

The system of Liang et al. is calibrated by impinging an ideal plane wave of light on the lenslet array so that a reference or calibrating pattern of focus spots is imaged on the CCD. Since the ideal wavefront is planar, each spot related to the ideal wavefront is located on the optical axis of the corresponding lenslet. When a distorted wavefront passes through the lenslet array, the image spots on the CCD are shifted with respect to a reference pattern generated by the ideal wavefront. Each shift is proportional to a local slope, i.e., partial derivatives of the distorted wavefront, which partial derivatives are used to reconstruct the distorted wavefront, by means of modal wavefront estimation using Zernike polynomials.

Various embodiments of a method and system for objectively measuring aberrations of optical systems by wavefront analysis have been disclosed in commonly owned application Serial No. 10/091,616 (now U.S. Patent 6,497,483), filed March 6, 2002, entitled "Apparatus and Method for Objective Measurements of Optical Systems Using Wavefront Analysis," which is a continuation-in-part of Serial No. 09/566,409 (now U.S. Patent 6,460,997), filed May 8, 2000.

In one embodiment, the radiation is optical radiation and the wavefront sensor is implemented using a plate and a planar array of light-sensitive cells. The plate is generally opaque but has an array of light-transmissive apertures that selectively let impinging light through. The plate is disposed in the path of the wavefront so that portions of the wavefront pass through the light-transmissive apertures. The planar array of cells is arranged parallel to and spaced apart from the plate by a selected distance. Each portion of the wavefront passing through one of the light-transmissive apertures illuminates a geometric shape covering a unique plurality of cells.

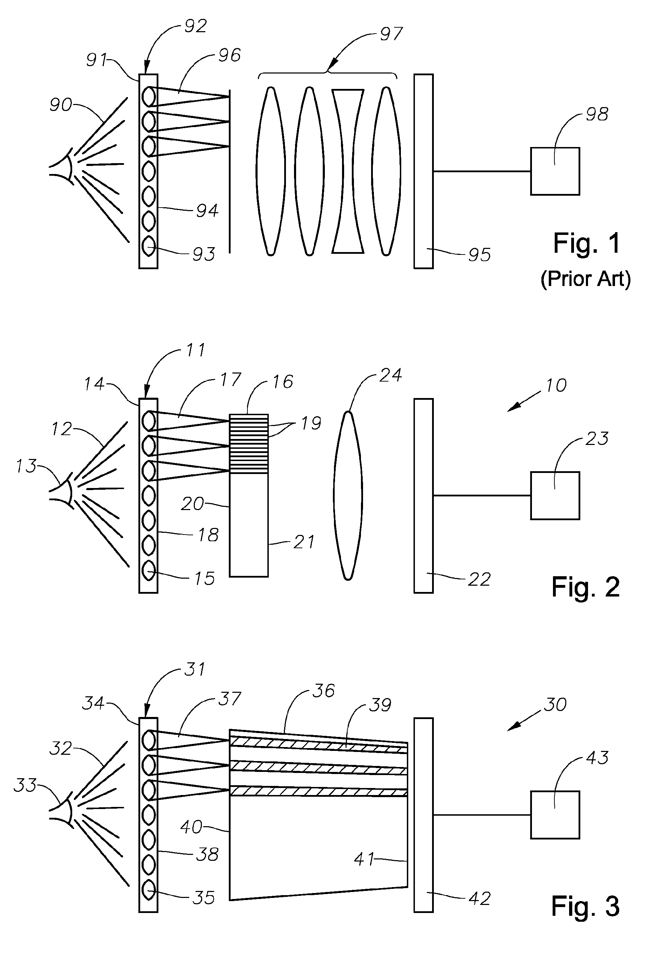

In another embodiment, illustrated in FIG. 1, the wavefront optical path relays a re-emitted wavefront **90** from the corneal plane to a Hartmann-Shack wavefront sensor. The wavefront **90** is incident on the sensor and is received by an upstream face **91** of an optical plate containing an array **92** of lenslets **93**. The image emerging from a downstream face **94** of the array **92** passes to a sensitive charged-coupled-device (CCD) camera **95.** The lenslet array **92** is parallel to the CCD detector **95** face, with a distance therebetween approximately equal to the focal length of each lenslet **93** in the array **92**. The lenslet array **92** divides the incoming wavefront **90** into a matching array of wavelets **96**, each of which focuses to a small spot on the CCD detector plane **95** after passing through a lens relay system **97**, which may be used to achieve demagnification upstream of the CCD **95**. The constellation of wavelet spots in the CCD **95** is used to reconstruct the shape of the incident wavefront **90** in a processor **98**. Collimated light striking the lenslet **93** at normal (perpendicular) incidence would focus to the spot on the CCD face **95** where this optical axis intersects. The optics of the system provide collimated light to the wavefront sensor using a calibration optical path.

A potential difficulty with the system illustrated in FIG. 1 includes the nonlinearity of the demagnification ratio as a function of position in the input plane. Another is the difficulty of accurately accounting for the slope of the incoming waves from the lenslets. Therefore, it would be desirable to achieve a relay system having a constant demagnification ratio within a small error.

It would also be desirable to be able to reduce the size of the CCD while retaining a desired acuity and stability, which reduces the cost of the system.

### SUMMARY OF THE INVENTION

It is an object of the present invention to provide a system and method for objectively measuring ocular aberrations using a wavefront analyzer.

It is a further object to provide such a system and method for improving a quality of a spot pattern impinging on a sensor.

It is an additional object to provide a system and method for demagnifying an image upstream of the sensor.

It is also an object to provide such a system and method that permits the use of a smaller sensor array.

It is another object to provide a method for constructing such a system.

These and other objects are achieved by the present invention, which provides a system and method for sensing an incoming wavefront reflected from a retina of an eye, in accordance with claims which follow. The optical wavefront sensing system comprises a lenslet array positioned for receiving an incoming wavefront. Downstream of the lenslet array is positioned a means for transforming an image emerging from the lenslet array at a focal plane thereof into a real image. Means for sensing the transformed image are positioned at a final image plane. This sensor may comprise, but is not intended to be limited to, a charge-coupled-device (CCD) camera.

The method for sensing an optical wavefront of the present invention, comprises the steps of receiving an incoming wavefront using a lenslet array and transforming an image emerging from the lenslet array at a focal plane thereof into a real image. The transformed image positioned at a final image plane is then sensed, and, in a preferred embodiment, analyzed to determine wavefront distortions.

The features that characterize the invention, both as to organization and method of operation, together with further objects and advantages thereof, will be better understood from the following description used in conjunction with the accompanying drawings. It is to be expressly understood that the drawings are for the purpose of illustration and description and are not intended as a definition of the limits of the invention. These and other objects attained, and advantages offered, by the present invention will become more fully apparent as the description that now follows is read in conjunction with the accompanying drawings.

### BRIEF DESCRIPTION OF THE DRAWINGS

FIG. 1 (prior art) is a schematic diagram of a system for wavefront sensing.
FIG. 2 is a schematic diagram of a first embodiment of the present invention for wavefront sensing.
FIG. 3 is a schematic diagram of a second embodiment of the present invention for wavefront sensing.

### DETAILED DESCRIPTION OF THE PREFERRED EMBODIMENTS

A description of the preferred embodiments of the present invention will now be presented with reference to FIGS. 2 and 3.

A first embodiment **10** of an optical wavefront sensing system (FIG. 1) comprises a lenslet array **11** that is positioned for receiving an incoming wavefront **12** reflected from an eye **13** onto an upstream face **14**. As disclosed previously in the commonly owned U.S. 6,497,483 and U.S. 6,460,997 patents and above, the lenslet array **11** comprises an optical plate containing an array of lenslets **15**. A fiber-optic faceplate **16** is positioned to receive the image **17** emerging from a downstream face **18** of the lenslet array **11** at an upstream plane **20**. The faceplate **16** achieves the transformation of the image emerging from the lenslet array **11** at a focal plane thereof into a real image.

The faceplate **16** comprises a bundle of individual optical fibers **19** extending from the upstream plane **20** of the faceplate **16** to a downstream plane **21** thereof, for precisely transmitting an image therethrough. Such faceplates **16** are known in the art and are available in a variety of dimensions from various manufacturers (Incom, Southbridge, MA; Collimated Holes, Campbell, CA; Schott Fiber Optics, MA; Edmund Industrial Optics, Barrington, NJ).

As above, in known Hartmann-Shack wavefront sensors, means are provided for sensing the transformed image, such as a charge-coupled-device camera **22**, which is positioned at a final image plane. Also as previously discussed, means are further provided for analyzing a wavefront distortion in the sensed image, shown here as processor **23** containing software for receiving sensed image data and performing the desired analysis thereon.

One of the benefits of using the faceplate **16** is that the slope of the incoming wavefront from the lenslet array **11** is not transmitted; that is, the rays are "straightened out," which improves the quality of the spot pattern incident on the CCD camera **22**. In some instances it may be desired to also include a demagnification lens **24** between the faceplate **16** and the CCD camera **22**, but this is not intended as a limitation.

A second embodiment **30** of the invention (FIG. 2) comprises a lenslet array **31**, as above for the first embodiment **10**, that is positioned for receiving an incoming wavefront **32** reflected from an eye **33** onto an upstream face **34**. As above, the lenslet array **31** comprises an optical plate containing an array of lenslets **35**. Here a tapered-fiber-optic demagnification relay **36** is positioned to receive the image **37** emerging from a downstream face **38** of the lenslet array **31** at an upstream plane **40**. The relay **36** also achieves a transformation of the image emerging from the lenslet array **31** at a focal plane thereof into a real image, but also reduces the size of the incoming image.

The relay **36** comprises a bundle of individual optical fibers **39** extending from the upstream plane **40** of the relay **36** to a downstream plane **41** thereof, for precisely transmitting an image therethrough and demagnifying the image with a substantially constant ratio with a very small error. The relay **36** is adapted to reduce the lenslet array focal plane image to a dimension smaller than a dimension of the incoming wavefront **32**. Such relays **36** are known in the art and are available in a variety of dimensions from various manufacturers (Schott Fiber Optics, MA; Edmund Industrial Optics, Barrington, NJ). The demagnification relay **36** comprises a plurality of fiber optics **39** having a first diameter at the upstream plane **40** and a second diameter smaller than the first diameter at the downstream plane **41**. Typically the fiber optics **39** have a substantially conical shape.

As above, in known Hartmann-Shack wavefront sensors, means are provided for sensing the transformed image, such as a charge-coupled-device camera **42**, which is positioned at a final image plane. Also as previously discussed, means are further provided for analyzing a wavefront distortion in the sensed image, shown here as processor **43** containing software for receiving sensed image data and performing the desired analysis thereon.

As in the first embodiment **10,** one of the benefits of using the relay **36** is that the slope of the incoming wavefront from the lenslet array **31** is not transmitted; that is, the rays are "straightened out," which improves the quality of the spot pattern incident on the CCD camera **42**. In this embodiment the relay **36** performs both the transformation and the demagnification between the upstream plane **40** and the CCD camera **42**.

It may be appreciated by one skilled in the art that additional embodiments may be contemplated, including alternate optical elements to achieve similar functions. In the foregoing description, certain terms have been used for brevity, clarity, and understanding, but no unnecessary limitations are to be implied therefrom beyond the requirements of the prior art, because such words are used for description purposes herein and are intended to be broadly construed. Moreover, the embodiments of the apparatus illustrated and described herein are by way of example, and the scope of the invention is not limited to the exact details of construction.

## Claims

1. An optical wavefront sensing system (10,30) comprising:
a lenslet array (11,31) positioned for receiving an incoming wavefront (12,32);
means (16,36) for transforming an image (17,37) emerging from the lenslet array at a focal plane (20,40) thereof into a real image; and
means (22,42) for sensing the transformed image positioned at a final image plane (21,41).

2. The system recited in Claim 1, wherein the image-transforming means comprises a fiber-optic faceplate (16) positioned to receive the image emerging from the lenslet array (11) at an upstream plane (20,40) and to transmit the image therethrough to a downstream plane (21,41).

3. The system recited in Claim 1, further comprising a demagnification means (24) positioned between the image-transforming means (16) and the sensing means (22).

4. The system recited in Claim 3, wherein the demagnification means (24) comprises a lens.

5. The system recited in Claim 1, wherein the image-transforming means comprises a demagnification relay (36) adapted to reduce the lenslet array (31) focal plane image (37) to a dimension smaller than a dimension of the incoming wavefront (32).

6. The system recited in Claim 5, wherein the demagnification relay (36) comprises a tapered-fiber-optic device comprising a plurality of fiber optics (39) having a first diameter at an upstream plane (40) and a second diameter smaller than the first diameter at a downstream plane (41).

7. The system recited in Claim 6, wherein the fiber optics (39) have a substantially conical shape.

8. The system recited in any one of Claims 1 to 7, further comprising means (23,43) for analyzing a wavefront distortion in the sensed image.

9. The system recited in any one of Claims 1 to 8, wherein the sensing means (22,42) comprises a charge-coupled-device camera or a small-active-area camera.

10. The system recited in Claim 8 or Claim 9, adapted for determining refractive aberrations of an eye (13,33) further comprising means for directing a beam of light onto a cornea of an eye;
wherein the lenslet array (11,31) is positioned for receiving a wavefront (12,32) reflected from a retina of the eye;
and wherein the means for sensing (22,42) and analyzing (23,43) the wavefront distortions determines aberrations from planarity of the reflected wavefronts.

11. A method for sensing an optical wavefront comprising the steps of:
receiving an incoming wavefront (12,32) using a lenslet array (11,31);
transforming an image (17,37) emerging from the lenslet array at a focal plane (20,40) thereof into a real image; and
sensing the transformed image positioned at a final image plane (21,41).

12. The method recited in Claim 11, wherein the image-transforming step comprises receiving the image emerging from the lenslet array (11,31) at an upstream plane (20,40) using a fiber-optic faceplate (16,36), the image then transmitted therethrough to a downstream plane (21,41).

13. The method recited in Claim 11 or Claim 12, further comprising demagnifying the transformed image prior to the sensing step.

14. The method recited in Claim 13, wherein the demagnifying step comprises reducing the lenslet array focal plane (20,40) image to a dimension smaller than a dimension of the incoming wavefront (12,32).

15. The method recited in Claim 13, wherein the demagnifying step comprises using a lens (24) or lens relay.

16. The method recited in Claim 13, wherein the demagnifying step comprises using a tapered-fiber-optic device (36) comprising a plurality of fiber optics (39) having a first diameter at an upstream plane (40) and a second diameter smaller than the first diameter at a downstream plane (41).

17. The method recited in Claim 16, wherein the fiber optics (39) have a substantially conical shape.

18. The method recited in any one of Claims 11 to 17, further comprising the step of analyzing a wavefront distortion in the sensed image.

19. The method recited in Claim 18, wherein the sensing step comprises using a charge-coupled-device camera (22,42) or a small-active-area camera.

20. The method recited in Claim 18 or Claim 19, adapted for determining refractive aberrations of an eye (13,33) further comprising the steps of:
directing a beam of light onto a cornea of an eye (13,33);
receiving a wavefront (12,32) reflected from a retina of the eye using a lenslet array (11,31);
transforming an image emerging from the lenslet array at a focal plane thereof into a real image; and
determining aberrations from planarity of the reflected wavefronts by sensing and analyzing a wavefront distortion in the sensed image.

21. The method recited in Claim 20, further comprising the steps of:
demagnifying the real image at a final image plane; and
sensing and analyzing the demagnified image for determining aberrations from planarity of the reflected wavefronts.
